Europäisches Patentamt

European Patent Office

Office européen des brevets

(19)

(11) EP 0 852 726 B1

(12) **FASCICULE DE BREVET EUROPEEN**

(45) Date de publication et mention
de la délivrance du brevet:
**15.12.1999 Bulletin 1999/50**

(21) Numéro de dépôt: **96932635.4**

(22) Date de dépôt: **23.09.1996**

(51) Int Cl.⁶: **G01P 15/10**

(86) Numéro de dépôt international:
**PCT/FR96/01481**

(87) Numéro de publication internationale:
**WO 97/12249 (03.04.1997 Gazette 1997/15)**

(54) **TRANSDUCTEUR MONOLITHIQUE D'ACCELERATION**

MONOLITHISCHER BESCHLEUNIGUNGSMESSAUFNEHMER

MONOLITHIC ACCELERATION TRANSDUCER

(84) Etats contractants désignés:
**CH DE ES FR GB GR IT LI NL SE**

(30) Priorité: **26.09.1995 FR 9511365**

(43) Date de publication de la demande:
**15.07.1998 Bulletin 1998/29**

(73) Titulaire: **ONERA (Office National d'Etudes et de Recherches Aérospatiales)**
**92320 Châtillon (FR)**

(72) Inventeurs:
• **LE TRAON, Olivier**
**F-91430 Vauhallan (FR)**

• **JANIAUD, Denis**
**F-91940 Les Ulis (FR)**
• **MULLER, Serge**
**F-91290 Ollainville (FR)**

(74) Mandataire: **Martinet & Lapoux**
**BP 405 - Guyancourt**
**78055 St. Quentin en Yvelines Cédex (FR)**

(56) Documents cités:
**EP-A- 0 414 588        EP-A- 0 614 087**
**EP-A- 0 620 415        WO-A-94/14076**
**FR-A- 2 528 183**

# Description

La présente invention concerne un transducteur monolithique d'accélération comprenant une partie fixe, une partie massive mobile et un résonateur ayant l'une de ses deux extrémités solidaire de la partie massive mobile.

Ce transducteur est destiné par exemple à un accéléromètre à sortie différentielle. En particulier, l'invention prévoit un accéléromètre miniature et de faible coût pouvant être utilisé par exemple pour la navigation d'avions et d'hélicoptères, pour le guidage de missiles et la suspension active de véhicules terrestres.

Le résonateur constituant l'élément sensible du transducteur selon l'invention est de préférence une lame vibrante en matériau piézoélectrique travaillant en flexion ou en torsion. Les fréquences de vibration de la lame sont très sensibles à la force d'extension ou de compression qui s'exerce longitudinalement à la lame lorsque la partie massive mobile constituant la masse d'épreuve est soumise à une accélération. L'extension ou la compression de la lame est convertie sous forme de signaux électriques qui sont captés par exemple par des électrodes supportées par la lame vibrante et reliées à un circuit oscillateur. En sortie du circuit oscillateur est produit un signal dont les variations de fréquence sont représentatives de celles de l'accélération.

Par rapport aux capteurs accélérométriques traditionnels à sortie analogique (par exemple une tension électrique), les accéléromètres à sortie en fréquence présentent l'avantage d'un potentiel de performance supérieur, car la fréquence est une grandeur aisément exploitable sous forme numérique.

Un autre aspect important est le caractère monolithique du transducteur, qui rend peu coûteuse la fabrication d'accéléromètres miniatures par usinage chimique, et qui favorise de bonnes performances, puisque des assemblages de pièces constituent généralement une limitation majeure des transducteurs non monolithiques.

Les matériaux les plus fréquemment utilisés pour réaliser les transducteurs monolithiques sont le quartz et le silicium, appréciés pour l'excellente stabilité de leurs caractéristiques mécaniques.

Selon la demande de brevet FR-A-2 685 964 au nom du demandeur, **le corps d'un accéléromètre** CA' montré à la figure 1 est monolithique et est obtenu par usinage chimique d'une plaque de cristal piézoélectrique tel que du quartz. Le corps de l'accéléromètre CA' a la forme générale d'un parallélépipède et comprend une partie massive fixe 1 solidaire d'une embase ba, une partie massive mobile 2, deux lames vibrantes $3_1$ et $3_2$ et deux articulations flexibles $44_1$ et $44_2$. Le corps d'accéléromètre CA' présente une symétrie par rapport à l'axe longitudinal central z'z.

La lame $3_1$ est une poutre, à petite section rectangulaire, excitée piézoélectriquement en vibration de flexion par deux électrodes métalliques $34_1$ et $34_2$ ayant des polarités opposées. Ces électrodes sont imprimées par photolithographie sur le côté longitudinal externe de la lame, et se terminent sur la face correspondante F1 de la partie fixe 1 par deux plaques conductrices $33_1$ et $33_2$ reliées à deux premières bornes d'un circuit oscillateur $5_1$ au moyen de deux fils conducteurs $39_1$ et $39_2$. Une disposition identique d'électrodes et de plaques est prévue sur la lame $3_2$ et la face opposée F2 de la partie fixe 1, en relation avec un second circuit oscillateur $5_2$.

Les sorties des deux circuits oscillateurs $5_1$ et $5_2$ sont reliées à un dispositif de mesure de fréquence différentielle incluant un circuit de soustraction de fréquence 6 et un fréquencemètre 7, la fréquence mesurée (f1-f2) par le fréquencemètre 7 étant représentative de l'accélération à mesurer.

S'agissant de la conception mécanique de l'accéléromètre connu CA', il est rappelé que les deux articulations $44_1$ et $44_2$ sont flexibles suivant la direction sensible DS perpendiculaire au plan médian pm du corps. Ainsi lorsque l'accéléromètre est soumis à une accélération suivant cette direction sensible DS, les lames $3_1$ et $3_2$ subissent une extension et une compression, c'est-à-dire des forces axiales opposées et proportionnelles à l'accélération. Il en résulte pour ces deux lames des variations de fréquence de signes contraires et, si les deux lames sont identiques, de même valeur. Par contre, les grandeurs d'entrée parasites, telle la température, agissent généralement en mode commun sur les deux lames et provoquent des variations de fréquence de même signe. L'intérêt de la sortie différentielle $(f_1$-$f_2)$ est de permettre de réduire les grandeurs d'entrée autres que l'accélération suivant la direction sensible DS.

La forme particulière, en marche d'escalier, des articulations $44_1$ et $44_2$ autorise l'usinage chimique du corps CA' en une seule étape avec une même profondeur d'usinage à partir des deux faces F1 et F2 du corps du transducteur parallèles au plan pm.

La conception mécanique de l'accéléromètre connu CA' présente des inconvénients particulièrement au sujet des vibrations des deux lames $3_1$ et $3_2$. En premier lieu, les efforts mécaniques, tels qu'effort tranchant et moment fléchissant, engendrés par les vibrations des deux lames $3_1$ et $3_2$ à leur "encastrements" sur la partie massive fixe 1 provoquent une fuite d'énergie mécanique vibratoire vers l'embase ba qui lui est solidaire. Il en résulte une diminution du coefficient de surtension de la vibration de chacune des lames $3_1$ et $3_2$. En second lieu, les efforts mécaniques engendrés par les vibrations de ces lames à leurs "encastrements" sur la partie mobile 2 provoquent des petits déplacements vibratoires de ladite partie mobile aux mêmes fréquences que les vibrations des lames $3_1$ et $3_2$. Il en résulte un couplage mécanique entre les vibrations de ces deux lames, qui se traduit par une perturbation de leurs vibrations. Ces deux inconvénients affectent la précision de la mesure de la fréquence différentielle (f1-f2), et donc la valeur de l'accélération qui en est déduite.

**Un deuxième transducteur monolithique** connu par la demande de brevet WO-A-89/10568 est montré à la figure 2. Le corps de ce deuxième transducteur obtenu par usinage chimique d'une plaque de silicium comprend une partie fixe 21, une masse d'épreuve 22 et trois résonateurs 23, 24 et 25 vibrant en flexion et excités par exemple par effet thermo-mécanique au moyen de résistances chauffantes (non représentées) obtenues par implantation ionique sur chaque résonateur. La direction sensible de ce deuxième transducteur connu est perpendiculaire aux faces de la plaque. Le signal de sortie du transducteur est fonction d'une combinaison linéaire des fréquences des trois résonateurs 23, 24 et 25 indépendante des accélérations perpendiculaires à la direction sensible.

L'inconvénient majeur du deuxième transducteur connu est un couplage mécanique entre les vibrations des trois résonateurs, ce qui affecte la précision du transducteur.

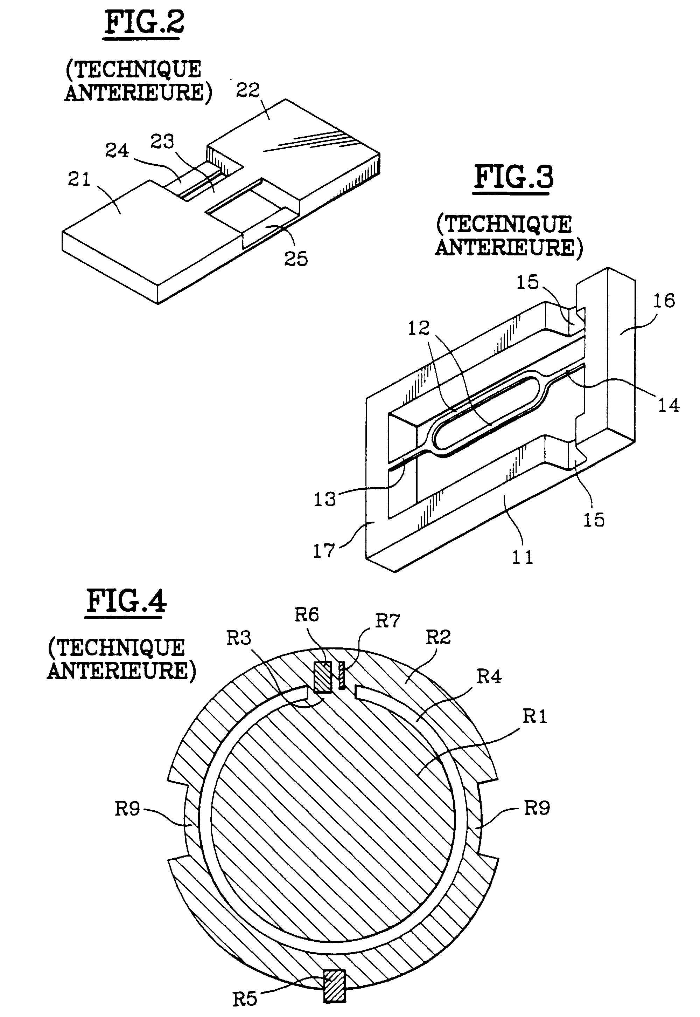

La figure 3 montre le corps d'un **troisième transducteur monolithique** obtenu par usinage chimique d'une plaque de silicium, divulgué par la demande de brevet GB-A-2 162 314. Le corps du troisième transducteur comprend un cadre-support 11 ayant des portions minces flexibles 15, et un résonateur en forme de double diapason constitué de deux filaments 12 vibrant en opposition de phase et de deux portions d'extrémité 13 et 14 solidaires du cadre-support. La portion d'extrémité 14 est reliée à une partie fixe 16 du cadre-support, et l'autre portion d'extrémité 13 est reliée à une partie mobile 17 en forme de U du cadre-support constituant la masse d'épreuve. Les parties fixe et mobile 16 et 17 sont reliées par les portions flexibles 15 constituant des articulations.

Un premier inconvénient du troisième transducteur connu concerne le confinement insuffisant de l'énergie mécanique vibratoire dans les deux filaments 12, compte tenu de la faible masse de la partie mobile 17.

Un second inconvénient du troisième transducteur connu concerne l'emplacement des articulations 15 de la masse d'épreuve 17, préjudiciable au comportement thermo-mécanique du transducteur lorsqu'il est soumis à des variations rapides de température. Dans ce cas, une différence entre la température $\theta_1$ de la partie fixe 16 et la température $\theta_2$ de la masse d'épreuve 17 apparaît, du fait que ces deux parties sont reliées par le résonateur 12 et les articulations 15 qui peuvent être considérés comme des filtres thermiques à cause de leurs faibles sections. La température moyenne du résonateur 12 est alors sensiblement égale à celle des articulations 15 et vaut sensiblement $(\theta_1 + \theta_2)/2$. La position des articulations 15, prise parallèlement aux filaments 12, est sensiblement à l'aplomb de la portion d'extrémité 14 du résonateur, et ainsi les branches parallèles de la masse d'épreuve en U 17 s'étendent sensiblement sur toute la longueur du résonateur. Dans ces conditions, les dilatations thermiques du résonateur et du cadre support 11 ne sont pas équilibrées, et induisent des contraintes mécaniques d'extension ou de compression du résonateur dont la variation de fréquence est faussement interprétée comme une accélération.

La figure 4 représente **un résonateur connu** destiné à un oscillateur thermostaté à faible consommation et chauffage rapide, décrit dans la demande de brevet FR-A-2 688 954. Contrairement aux transducteurs d'accélération connus décrits précédemment, ce résonateur est conçu pour délivrer un signal dont la fréquence doit être la plus stable possible et donc être peu sensible à une accélération. Les fonctions de ce résonateur sont ainsi différentes de celles du transducteur selon la présente invention.

Du point de vue structurel, le résonateur représenté à la figure 4 comprend une partie centrale R1 et une partie périphérique R2 formant un anneau entourant à faible distance radiale la partie centrale et reliée à celle-ci par une partie intermédiaire R4 dans laquelle est pratiquée une lumière. La partie périphérique R2 est reliée à la partie centrale R1 par un unique pont de liaison R3 qui est constitué par la partie non évidée de la partie intermédiaire R4 et qui s'étend sur une faible fraction de cette partie intermédiaire R4.

La partie centrale R1 constitue la partie vibrante active du résonateur tandis que la partie périphérique R2 est immobilisée dans un boîtier par un moyen de fixation rapporté R5, tel que pince, placé au niveau d'une zone de la partie périphérique R2 située à l'opposé du pont unique de liaison R3 par rapport à la partie centrale active R1.

Cette réalisation à unique pont de liaison assure une canalisation des flux thermiques de conduction et un bon contrôle de la température du résonateur, au moyen d'un élément chauffant R6 et d'un capteur de température R7 placés au niveau du pont de liaison R3. La partie centrale active R1 vibre en cisaillement d'épaisseur à une fréquence de l'ordre de 10 MHz. L'énergie mécanique vibratoire est confinée dans la partie centrale grâce à la convexité de l'une au moins des deux grandes faces de la partie centrale.

La présente invention vise à remédier aux inconvénients des transducteurs connus décrits précédemment, en proposant un transducteur monolithique tel que défini dans l'entrée en matière, notamment pour accéléromètre différentiel, dont la structure géométrique évite des fuites d'énergie mécanique vibratoire du résonateur vers la partie fixe du transducteur. Le coefficient de surtension du résonateur n'est pas altéré et le couplage mécanique avec un autre résonateur analogue est supprimé, ce qui améliore la précision de l'accéléromètre.

A cette fin, le transducteur selon l'invention est caractérisé en ce qu'il comprend une seconde partie massive mobile solidaire de l'autre extrémité du résonateur, un cadre flexible entourant les deux parties massives mobiles, un premier élément de liaison reliant le cadre à la seconde partie massive mobile et un second élément de liaison reliant le cadre à la partie fixe.

Ainsi, la souplesse du cadre et la situation des deux parties massives mobiles à l'intérieur de ce cadre permettent de réaliser un filtre mécanique entre le résonateur et la partie fixe du transducteur, ladite partie fixe n'étant pratiquement pas sollicitée par les vibrations du résonateur. Le coefficient de surtension du résonateur n'est donc pratiquement pas altéré et la précision de la mesure fournie par le transducteur est ainsi améliorée.

Selon une réalisation préférée, le cadre flexible est rectangulaire et comprend deux tronçons s'étendant sensiblement parallèlement au résonateur, et deux autres tronçons s'étendant sensiblement perpendiculairement au résonateur et reliés respectivement à la seconde partie massive mobile et la partie fixe par les premier et second éléments de liaison. Le premier élément de liaison a une largeur inférieure à la largeur de la seconde partie massive mobile, et le second élément de liaison a une largeur inférieure à la longueur desdits autres tronçons de cadre, lesdites largeurs étant prises suivant la longueur desdits autres tronçons. De préférence au moins l'un des éléments de liaison a une section transversale du même ordre de grandeur que celles des tronçons de cadre.

Afin d'obtenir l'efficacité maximale du filtre mécanique, les deux parties massives mobiles, le résonateur, le cadre flexible et les deux éléments de liaison ont de préférence un même plan de symétrie perpendiculaire au plan du cadre, les deux éléments de liaison étant situés respectivement à deux intersections du cadre et dudit plan de symétrie.

Selon d'autres caractéristiques de l'invention, le corps monolithique du transducteur comprend deux lamelles coplanaires ayant chacune des extrémités solidaires des deux parties mobiles respectivement, et disposées de part et d'autre du résonateur. Ces lamelles peuvent avoir une longueur nettement inférieure à celle du résonateur, afin de favoriser la robustesse mécanique du transducteur. La position des lamelles peut être sensiblement à l'aplomb du milieu de la longueur du résonateur, pour éviter qu'une variation rapide de température induise des contraintes mécaniques parasites.

De préférence, afin d'usiner chimiquement en une seule étape le corps monolithique du transducteur à partir d'une plaque de matériau d'épaisseur uniforme, les lamelles affleurent une face de ladite plaque, c'est-à-dire une face commune au moins aux parties massives mobiles, le résonateur affleure l'autre face de la plaque, c'est-à-dire une autre face commune au moins aux parties massives mobiles, et les lamelles et le résonateur ont une même dimension d'épaisseur prise suivant l'épaisseur de la plaque, c'est-à-dire des parties massives mobiles.

La partie fixe peut être disposée à l'intérieur du cadre de manière à miniaturiser davantage le transducteur.

L'invention concerne également un accéléromètre de type à sortie différentielle comportant deux transducteurs d'accélération selon l'invention. La position du second transducteur est déduite de celle du premier transducteur par une rotation de 180° autour d'un axe parallèle à un axe passant par les deux extrémités du résonateur du premier transducteur, les parties fixes des deux transducteurs étant solidaires d'une embase commune.

Selon une première réalisation préférée, les transducteurs sont symétriques l'un de l'autre par rapport à un plan parallèle à des faces coplanaires des parties massives mobiles de chacun des transducteurs.

Selon une seconde réalisation préférée, les parties massives mobiles, les cadres et les parties fixes des transducteurs ont des faces coplanaires, les transducteurs étant de préférence symétriques l'un de l'autre par rapport à un axe parallèle aux faces coplanaires.

D'autres caractéristiques et avantages de la présente invention apparaîtront plus clairement à la lecture de la description suivante de plusieurs réalisations préférées de l'invention en référence aux dessins annexés correspondants dans lesquels :

- les figures 1, 2 et 3 sont des vues en perspective des trois transducteurs d'accélération monolithiques selon la technique antérieure et déjà commentés ;
- la figure 4 est une vue de dessus d'un résonateur selon la technique antérieure et déjà commenté ;
- la figure 5 est une vue en perspective d'un transducteur d'accélération selon une première réalisation de l'invention ;
- les figures 6A et 6B sont des vues de face et en perspective du transducteur de la figure 5 montrant des déformations exagérément agrandies du transducteur lorsque le résonateur du transducteur vibre en flexion et en torsion respectivement ;
- les figures 7A, 7B et 7C sont des vues en perspective des parties mobiles et du résonateur du transducteur de la figure 5 montrant des efforts mécaniques engendrés par chacune des trois composantes spatiales de l'accélération respectivement ;
- les figures 8A, 8B et 8C sont des vues en perspective de transducteurs d'accélération selon d'autres réalisations de l'invention privilégiant la robustesse mécanique du transducteur ;
- la figure 8D est une vue en perspective d'un transducteur d'accélération selon une autre réalisation de l'invention privilégiant la miniaturisation ;
- la figure 8E est une vue en perspective d'un transducteur d'accélération selon une autre réalisation de l'invention, avec des moyens de mise en vibration privilégiant un résonateur vibrant en flexion ;
- la figure 9 est une vue en perspective d'un accéléromètre différentiel selon l'invention, comportant deux transducteurs sensiblement identiques à celui de la figure 8E, avec des moyens de mesure de fréquence associés ; et

- la figure 10 est une vue en perspective d'un accéléromètre différentiel selon une autre réalisation de l'invention, obtenu par usinage de deux transducteurs dans une même plaque de matériau.

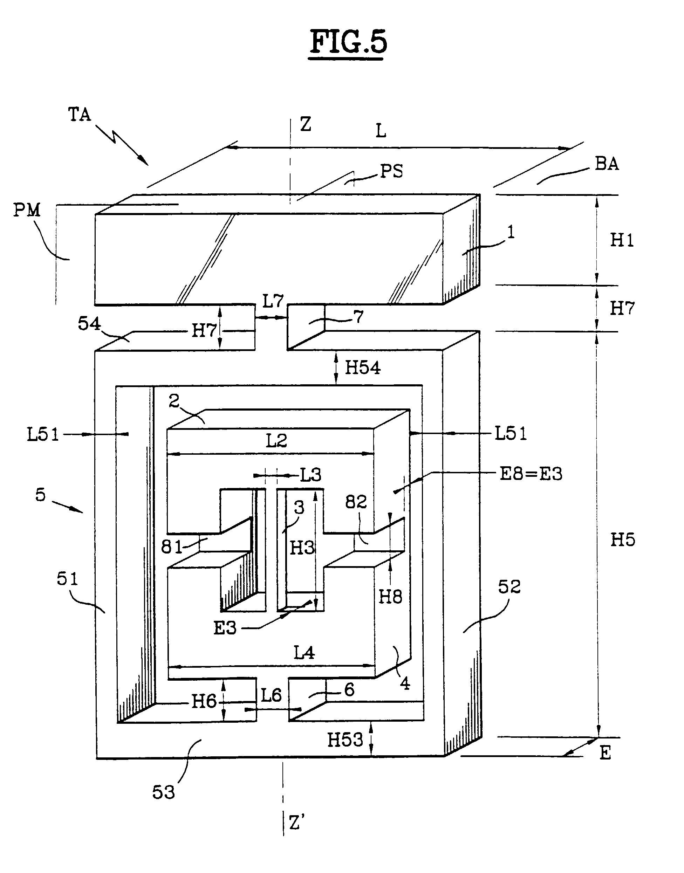

En référence à la figure 5, un **transducteur d'accélération** TA selon l'invention comprend essentiellement une partie fixe 1, une première partie massive mobile 2 constituant la masse d'épreuve, un résonateur 3 constituant l'élément sensible, une seconde partie massive mobile 4, un cadre flexible 5, et deux éléments de liaison 6 et 7.

Selon la réalisation illustrée à la figure 5, le transducteur TA constitue un **corps monolithique** usiné dans une même plaque de matériau, tel que du quartz ou du silicium, d'épaisseur uniforme E, de largeur L et de hauteur H1+H7+H5. Le transducteur TA a la forme générale d'un parallélépipède qui s'étend verticalement suivant le sens de la hauteur matérialisé par un axe longitudinal central Z'Z. Cet axe Z'Z est contenu d'une part dans un plan médian PM de la plaque parallèle aux faces de celle-ci, et d'autre part dans un plan PS perpendiculaire aux faces de la plaque. Le plan PS est un plan de symétrie du transducteur.

La partie fixe 1 constitue un pavé parallélépipédique disposé à une extrémité longitudinale du corps du transducteur et est destinée à être solidaire de la structure d'un engin (non représentée) par l'intermédiaire d'une embase de boîtier BA. La partie fixe 1 est fixée sur l'embase BA par exemple par collage.

Les parties mobiles 2 et 4 ont chacune la forme générale d'un U dont les deux branches parallèles sont disposées parallèlement à l'axe longitudinal central Z'Z du transducteur. Les âmes des formes en U des parties mobiles 2 et 4 sont perpendiculaires à l'axe Z'Z et disposées en regard l'une de l'autre. La partie mobile 2 est plus proche de la partie fixe 1 que la partie mobile 4. Selon la réalisation illustrée, les parties mobiles 2 et 4 ont au moins leurs largeurs L2 et L4 égales.

Selon la réalisation illustrée, le **résonateur 3** est une lame parallélépipédique dont la longueur H3 s'étend parallèlement à l'axe Z'Z et dont la section rectangulaire transversale est définie par une épaisseur E3 et une largeur L3 qui sont respectivement inférieures à et prises suivant l'épaisseur E et la largeur L du transducteur TA respectivement. Les extrémités du résonateur 3 sont solidaires des parties mobiles 2 et 4 respectivement et sont situées sur les faces planes en regard des âmes des parties mobiles. Un côté du résonateur 3 tourné vers l'extérieur du corps est coplanaire aux grandes faces correspondantes des parties 1, 2 et 4 du transducteur TA, et donc à la face correspondante de la plaque de matériau.

Le résonateur 3 est muni d'électrodes de mise en vibration à sa fréquence de résonance (non représentées) destinées à être couplées à un oscillateur et à un circuit de mesure de fréquence. Le résonateur 3 travaille de préférence en vibration de flexion ou de torsion, car les fréquences de ces vibrations sont très sensibles à la force d'extension ou de compression qui s'exerce longitudinalement au résonateur lorsque la partie massive mobile 2 constituant la masse d'épreuve est soumise à une accélération.

Le résonateur 3 peut avoir d'autres constitutions que celle de la lame parallélépipédique selon la réalisation illustrée à la figure 5. Par exemple, le résonateur 3 peut être du type en double diapason à deux ou trois lames décrit dans les documents antérieurs US-A-4 215 570 (EER NISSE) et US-A-4 594 898 (KIRMAN et al.).

S'agissant des électrodes de mise en vibration du résonateur 3, différentes constitutions sont possibles selon la nature du matériau constituant le corps monolithique du transducteur. Par exemple, dans le cas d'un matériau piézoélectrique tel que le quartz, il est avantageux d'utiliser des configurations d'électrodes à deux ou trois bandes conductrices décrites dans la demande de brevet FR-A-2 685 964 au nom du demandeur. D'autres moyens de mise en vibration peuvent aussi être mis en oeuvre, basés par exemple sur l'effet électrostatique.

S'agissant du résonateur 3 et de ses électrodes de mise en vibration, il doit être entendu que la portée de la présente demande de brevet s'étend à de telles variantes ainsi plus généralement qu'à toutes autres restant dans le cadre des équivalences.

Selon la réalisation illustrée à la figure 5, le **cadre flexible 5** a un contour de face rectangulaire et est constitué de quatre côtés formés par des tronçons parallélépipédiques 51, 52, 53, 54. La longueur H5 des tronçons 51 et 52 s'étend parallèlement à l'axe Z'Z, et leurs sections rectangulaires transversales sont définies par une même épaisseur L51 et une même largeur E prises suivant la largeur L et l'épaisseur E du transducteur TA respectivement. Les tronçons 53 et 54 ont une même longueur L prise suivant la largeur L du transducteur TA. Le tronçon 53 est disposé à l'extrémité longitudinale du transducteur opposée à celle où est disposée la partie fixe 1. Le tronçon 54 est disposé entre la partie fixe 1 et l'âme de la première partie mobile 2. Les sections rectangulaires des tronçons 53 et 54 sont définies par des épaisseurs H53 et H54 prises parallèlement à l'axe Z'Z et par une même largeur E prise suivant l'épaisseur E du transducteur.

Le cadre flexible 5 entoure les parties mobiles 2 et 4 et est relié d'une part à la partie mobile 4 par l'élément de liaison 6, et d'autre part à la partie fixe 1 par l'élément de liaison 7.

Selon la réalisation illustrée à la figure 5, l'élément de liaison 6 constitue un pavé parallélépipédique dont les dimensions H6, L6 et E sont prises suivant l'axe Z'Z, la largeur L et l'épaisseur E du transducteur TA respectivement. L'élément de liaison 6 est solidaire du tronçon 53 du cadre 5 et de la seconde partie mobile 4.

L'élément de liaison 7 constitue un pavé parallélépipédique dont les dimensions H7, L7 et E sont prises suivant l'axe Z'Z, la largeur L et l'épaisseur E du transducteur TA respectivement. L'élément de liaison 7 est solidaire du tronçon 54 du cadre 5 et de la partie fixe 1.

Pour chacun des éléments de liaison 6 et 7, les plans PM et PS sont des plans de symétrie.

Le corps monolithique du transducteur TA comprend également deux **lamelles** parallélépipédiques 81 et 82 identiques et coplanaires, et disposées de part et d'autre du résonateur 3. Chacune des lamelles 81 et 82 a des extrémités solidaires des parties mobiles 2 et 4 respectivement. La longueur H8 des lamelles 81 et 82 prises parallèlement à l'axe Z'Z est nettement inférieure à la longueur H3 du résonateur, ce qui confère aux lamelles une raideur en flexion importante, favorable à la robustesse mécanique du transducteur TA. La longueur H8 des lamelles est généralement comprise entre H3/10 et H3/2.

De préférence, la position des lamelles 81 et 82 prise parallèlement à l'axe Z'Z est sensiblement au milieu de la longueur H3 du résonateur 3, ce qui se traduit pour les parties mobiles 2 et 4 en forme de U par des longueurs sensiblement égales de leurs branches parallèles à l'axe Z'Z. Cette position des lamelles évite que le résonateur soit soumis à des contraintes mécaniques parasites lorsque la température du transducteur TA n'est pas uniforme, ce qui est le cas quand l'embase de boîtier BA subit des variations rapides de température. Il apparaît alors en particulier une différence entre les températures des parties mobiles 2 et 4, la température moyenne du résonateur étant sensiblement égale à celle des lamelles 81 et 82 et valant sensiblement la moyenne des températures des deux parties mobiles.

Si les lamelles n'étaient pas situées sensiblement à l'aplomb du milieu de la longueur H3 du résonateur 3, des dilatations thermiques, suivant l'axe Z'Z, du résonateur, des lamelles et des parties mobiles ne seraient pas équilibrées. Il en résulterait des contraintes mécaniques d'extension ou de compression du résonateur dont la variation de fréquence correspondante serait faussement interprétée comme une accélération. Selon l'invention, la position des lamelles sensiblement à l'aplomb du milieu de la longueur H3 du résonateur permet d'éviter cet inconvénient.

Selon la réalisation illustrée à la figure 5, des faces des lamelles 81 et 82 tournées vers l'extérieur du corps du transducteur sont coplanaires à une face commune aux parties massives mobiles 2 et 4, et plus généralement à une face de la plaque de matériau, le côté du résonateur 3 tourné vers l'extérieur du corps étant coplanaire à l'autre face de la plaque. Les lamelles 81 et 82 ont une épaisseur E8 prise suivant l'épaisseur E de la plaque égale à l'épaisseur E3 du résonateur. De plus, l'épaisseur E3=E8 du résonateur et des lamelles est inférieure à la moitié de l'épaisseur E de la plaque. Généralement, l'épaisseur E3=E8 est comprise entre E/20 et E/4.

Les formes et les dimensions du résonateur et des lamelles autorisent l'usinage chimique en une seule étape pour fabriquer le corps monolithique du transducteur TA. A cette fin, et préalablement à l'usinage chimique, les deux faces de la plaque de matériau sont protégées chacune par un masque dont le motif géométrique est le motif de face du transducteur. Ainsi, la partie fixe 1, les parties mobiles 2 et 4, le cadre flexible 5 et les éléments de liaison 6 et 7 sont protégés sur les deux faces, alors que le résonateur 3 et les lamelles 81 et 82 ne sont protégés que sur leurs faces tournées vers l'extérieur du corps du transducteur. L'usinage chimique est ensuite effectué simultanément à partir des deux faces de la plaque jusqu'à atteindre une profondeur de gravure valant (E-E3). Puisque E3 est inférieur à E/2, la profondeur de gravure (E-E3) est supérieure à E/2 et ainsi de la matière a été suffisamment enlevée pour réaliser l'usinage débouchant aux endroits gravés à partir des deux faces de la plaque, par exemple entre la partie mobile 2 et le tronçon 54 du cadre flexible 5.

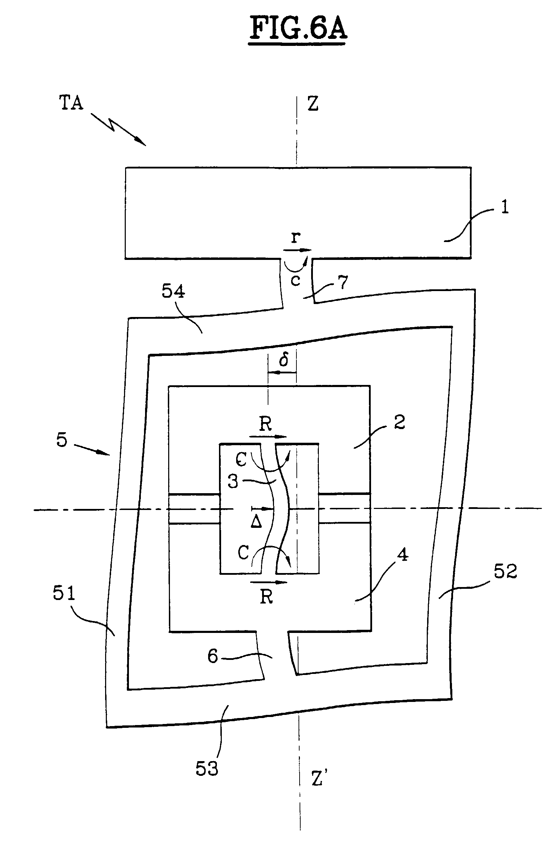

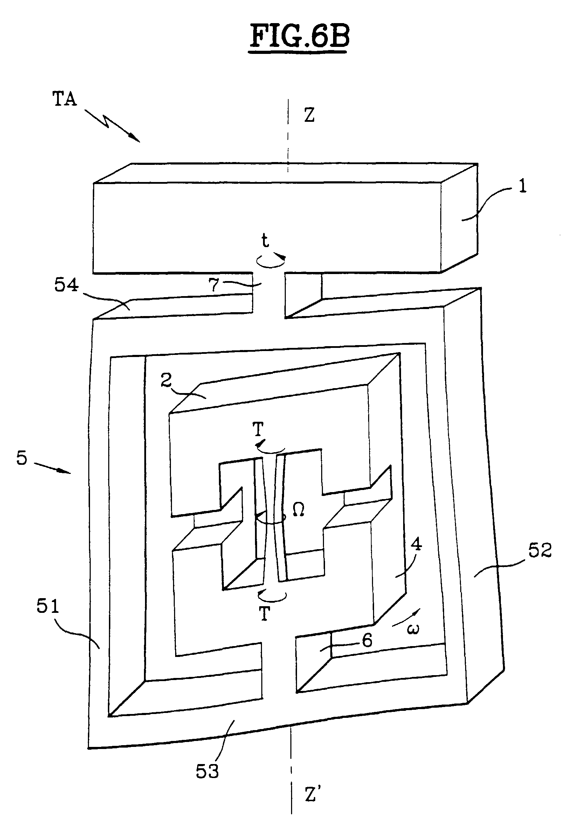

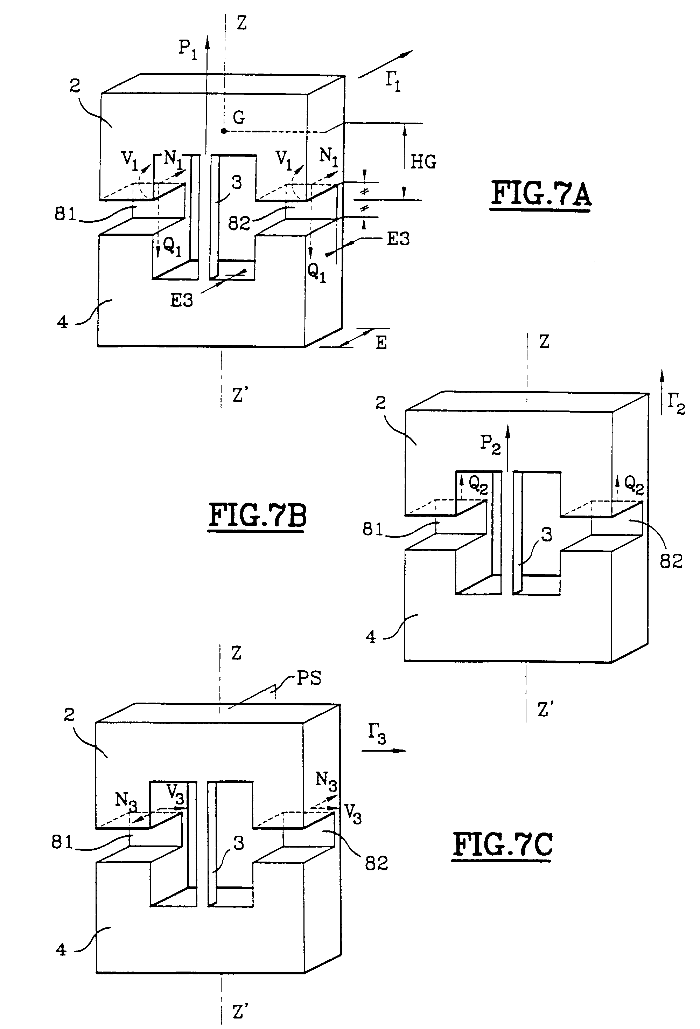

Le fonctionnement du transducteur est maintenant présenté en référence aux figures 6A et 6B qui montrent les avantages de la disposition particulière de la partie mobile 4, du cadre flexible 5 et des éléments de liaison 6 et 7, et aux figures 7A, 7B et 7C qui montrent le comportement mécanique de la partie mobile 2, du résonateur 3 et des lamelles 81 et 82 du transducteur soumis aux trois composantes spatiales de l'accélération.

La **figure 6A** est une vue de face du transducteur TA de la figure 5 lorsque le **résonateur 3 vibre en flexion** parallèlement aux faces de la plaque de matériau. Les déformations du résonateur 3, du cadre flexible 5 et des éléments de liaison 6 et 7 correspondent à des amplitudes de vibration et ont été exagérément agrandies pour faciliter la compréhension du dessin.

L'interprétation de ces phénomènes vibratoires est la suivante.

Lorsque le résonateur 3 vibre en flexion à sa fréquence de résonance, il applique au niveau de ses extrémités "encastrées" un effort tranchant R et un moment fléchissant C alternatifs sur chacune des parties mobiles 2 et 4 qui subissent de ce fait des déplacements alternatifs dont la composante principale δ est une translation parallèle aux faces de la plaque et perpendiculaire à l'axe longitudinal central Z'Z. Pour la compréhension du dessin, le déplacement δ des parties mobiles a été représenté plus grand que l'amplitude Δ de vibration du résonateur. Dans la réalité, δ est beaucoup plus petit que Δ, car la masse des parties mobiles est beaucoup plus grande que celle du résonateur. Ce petit déplacement alternatif δ des parties mobiles 2 et 4 crée, par l'intermédiaire de l'élément de liaison 6, une vibration forcée de faible amplitude du cadre flexible 5. Puisque les parties mobiles sont situées à l'intérieur du cadre, la vibration forcée du cadre est principalement du type en parallélogramme déformable, c'est-à-dire que les quatre tronçons 51, 52, 53 et 54 constituant le cadre sont soumis essentiellement à des efforts mécaniques de flexion, et non à des efforts d'extension ou de compression comme ce serait le cas si les parties mobiles étaient situées à l'extérieur du cadre. Les quatre tronçons étant souples en flexion, la partie fixe 1 ne reçoit que de très faibles efforts alternatifs dûs à la déformation alternative du cadre 5 par l'intermédiaire de l'élément de liaison 7. Les efforts alternatifs reçus par la partie fixe sont principalement une force r et un couple c dont les intensités sont très inférieures δ celles respectivement de l'effort tranchant R et du moment fléchissant C appliqués par le résonateur 3 sur chacune des parties mobiles 2 et 4. A titre d'exemple, des efforts r et c peuvent être obtenus cent fois plus petits que les efforts R et C respectivement.

Ainsi, la souplesse du cadre 5 et la situation des deux parties mobiles 2 et 4 à l'intérieur du cadre caractérisent un filtre mécanique entre le résonateur 3 et la partie fixe 1 du transducteur, ladite partie fixe étant très peu sollicitée par les vibrations du résonateur. Le coefficient de surtension du résonateur n'est donc pratiquement pas altéré et la précision de la mesure fournie par le transducteur est ainsi améliorée.

Toujours en référence à la figure 6A, les éléments de liaison 6 et 7 subissent des déformations alternatives principalement en flexion parallèlement aux faces de la plaque de matériau. Cela est dû au même ordre de grandeur des sections rectangulaires (L6.E) et (L7.E) des éléments de liaison 6 et 7 prises transversalement à l'axe Z'Z que les sections rectangulaires transversales (L51.E) , (H53.E) et (H54.E) des quatre tronçons 51, 52, 53 et 54 constituant le cadre. Il en résulte que les éléments de liaison 6 et 7 présentent une souplesse en flexion, certes moins grande que la souplesse du cadre, mais qui contribue néanmoins pour une petite part à l'efficacité du filtrage mécanique des vibrations du résonateur.

On rappelle que les déplacements et déformations alternatifs dont les amplitudes sont représentées sur la figure 6A constituent les phénomènes vibratoires principaux mis en jeu dans le transducteur. Dans la réalité, il coexiste d'autres phénomènes vibratoires, d'amplitudes plus petites, tels que par exemple une rotation alternative des parties mobiles 2 et 4 autour de l'axe longitudinal central Z'Z. Cette rotation alternative des parties mobiles est provoquée par les vibrations en flexion du résonateur 3 et est due au fait que le plan moyen dans lequel s'effectuent ces vibrations ne passe pas par l'axe Z'Z qui est un axe principal d'inertie des parties mobiles 2 et 4. La rotation alternative des parties mobiles engendre autour de l'axe Z'Z une torsion alternative du cadre flexible 5 dont la souplesse en torsion permet de ne transmettre à la partie fixe 1 qu'un très faible couple alternatif autour de l'axe Z'Z. Ce très faible couple n'a qu'une influence négligeable sur l'efficacité du filtrage mécanique des vibrations du résonateur. Cet aspect concernant la torsion sera expliqué plus en détail ultérieurement dans le cas d'un résonateur vibrant en torsion.

D'une façon plus générale, grâce à la souplesse du cadre 5, celui-ci filtre efficacement la plupart des sollicitations mécaniques alternatives exercées par les parties mobiles 2 et 4 sur l'élément de liaison 6. Toutefois, afin que le filtrage mécanique soit le plus efficace, il est préférable que les parties mobiles 2 et 4, le résonateur 3, le cadre flexible 5 et les éléments de liaison 6 et 7 aient le même plan de symétrie PS perpendiculaire aux faces de la plaque de matériau et passant par l'axe Z'Z, comme représenté sur la figure 5. Dans une variante où cette symétrie n'est pas respectée, qu'il s'agisse d'un choix délibéré ou d'imperfections de réalisation, les efforts mécaniques alternatifs transmis à la partie fixe 1 ont des intensités supérieures à celles correspondant à la réalisation symétrique, mais en général nettement inférieures aux intensités des efforts alternatifs R et C appliqués par le résonateur 3 sur chacune des parties mobiles 2 et 4. Les remarques ci-dessus montrent que l'efficacité du filtrage mécanique est relativement tolérante vis-à-vis des imperfections de réalisation, et que le transducteur selon l'invention est bien adapté à une fabrication à faible coût.

Le transducteur selon la réalisation illustrée à la figure 5 s'accommode également d'un résonateur 3 vibrant en flexion dans le plan PS, c'est-à-dire transversalement aux faces de la plaque de matériau.

Dans ce cas, les efforts mécaniques alternatifs appliqués par le résonateur sur les parties mobiles 2 et 4 sont parallèles au plan PS, et lesdites parties mobiles subissent de ce fait des petits déplacements alternatifs dont la composante principale est une translation perpendiculaire aux faces de la plaque de matériau. Ces petits déplacements alternatifs des parties mobiles provoquent, par l'intermédiaire de l'élément de liaison 6, une déformation alternative de faible amplitude du cadre flexible 5 dont les tronçons 51 et 52 sont déformés principalement en flexion parallèlement au plan PS et les tronçons 53 et 54 sont déformés principalement en torsion autour de leurs axes longitudinaux centraux respectifs. Les quatre tronçons 51, 52, 53 et 54 étant souples en flexion et en torsion, la partie fixe 1 ne reçoit que de très faibles efforts alternatifs dûs à la déformation alternative du cadre 5 par l'intermédiaire de l'élément de liaison 7. Les intensités des efforts alternatifs reçus par la partie fixe sont très inférieures à celles des efforts appliqués par le résonateur 3 sur les parties mobiles 2 et 4. Ainsi, d'une façon analogue au cas d'un résonateur vibrant en flexion parallèlement aux faces de la plaque de matériau, la partie fixe 1 est très peu sollicitée par les vibrations du résonateur dont le coefficient de surtension n'est ainsi pratiquement pas altéré.

La **figure 6B** est une vue en perspective du transducteur TA de la figure 5 lorsque le **résonateur 3 vibre en torsion** autour de son axe longitudinal central parallèle à l'axe Z'Z. De même que sur la figure 6A, les déformations du résonateur 3, du cadre flexible 5 et des éléments de liaison 6 et 7 correspondent à des amplitudes de vibration et ont été exagérément agrandies pour faciliter la compréhension du dessin.

Lorsque le résonateur 3 vibre en torsion à fréquence de résonance, il applique au niveau de ses extrémités encastrées un couple alternatif T sur chacune des parties mobiles 2 et 4 qui subissent de ce fait des déplacements alternatifs dont la composante principale est une rotation autour de l'axe Z'Z qui est un axe principal d'inertie desdites parties mobiles. Pour la compréhension du dessin, la rotation des parties mobiles a été représentée sensiblement aussi grande que l'amplitude $\Omega$ de vibration en torsion du résonateur. Dans la réalité, est beaucoup plus petite que $\Omega$, car l'inertie en rotation des parties mobiles est beaucoup plus grande que l'inertie du résonateur en torsion. Cette petite rotation des parties mobiles autour de l'axe Z'Z crée, par l'intermédiaire de l'élément de liaison 6, une vibration forcée de faible amplitude du cadre flexible 5 dont la déformation s'effectue en torsion autour de l'axe Z'Z. Cette déformation en torsion du cadre comprend principalement, pour chacun des tronçons de cadre 51, 52, 53 et 54, une déformation en torsion autour de son axe longitudinal central et une déformation en flexion perpendiculairement aux faces de la plaque de matériau. Les quatre tronçons étant souples en torsion et en flexion, la partie fixe 1 ne reçoit que de très faibles efforts alternatifs dûs à la déformation alternative du cadre 5 par l'intermédiaire de l'élément de liaison 7. Les efforts alternatifs reçus par la partie fixe sont principalement un couple t dont l'intensité est très inférieure à celle du couple T appliqué par le résonateur 3 sur chacune des parties mobiles 2 et 4. La partie fixe 1 est donc très peu sollicitée par les vibrations du résonateur dont le coefficient de surtension n'est ainsi pratiquement pas altéré.

Toujours en référence à la figure 6B, les éléments de liaison 6 et 7 subissent des déformations alternatives principalement en torsion autour de l'axe Z'Z. La souplesse en torsion des éléments de liaison, certes moins grande que celle du cadre flexible, contribue pour une petite part à l'efficacité du filtrage mécanique des vibrations du résonateur.

D'une façon analogue au résonateur vibrant en flexion, il est également préférable que les parties mobiles 2 et 4, le résonateur 3, le cadre flexible 5 et les éléments de liaison 6 et 7 aient le même plan de symétrie PS, comme représenté à la figure 5, afin que le filtrage mécanique des vibrations en torsion soit le plus efficace.

Grâce au cadre flexible 5, les fuites d'énergie vers la partie fixe 1 à la fréquence de résonance du résonateur 3 (quelques dizaines de KHz) sont diminuées tant pour les vibrations de flexion que de torsion. Cependant la tenue mécanique du transducteur n'est pas dégradée dans la bande passante d'utilisation (du continu à quelques centaines de Hz).

Les **figures 7A, 7B et 7C** sont des vues partielles en perspective du transducteur TA de la figure 5, limitées au résonateur 3, aux lamelles 81 et 82 et aux parties massives mobiles 2 et 4, et destinées à montrer les efforts mécaniques principaux exercés par la partie mobile 2 sur le résonateur et les lamelles lorsque le transducteur est soumis à chacune des trois **composantes spatiales de l'accélération**. Vis-à-vis de ces efforts mécaniques exercés par la partie mobile 2, les parties non représentées, c'est-à-dire la partie fixe 1, le cadre flexible 5 et les deux éléments de liaison 6 et 7 ont une influence pratiquement négligeable, et la partie mobile 4 peut ainsi être considérée comme directement fixée par exemple sur une embase.

En se référant à la figure 7A, l'accélération $\Gamma_1$ appliquée perpendiculairement aux faces de la plaque de matériau provoque sur le résonateur 3 une force d'extension longitudinale $P_1$, et sur chacune des lamelles 81 et 82 une force de compression longitudinale $Q_1$, une force de flexion transversale $N_1$ et un couple de flexion transversale $V_1$. Il existe d'autres efforts mécaniques (non représentés) exercés par la partie mobile 2 sur le résonateur et les lamelles, mais leur rôle n'est pas essentiel dans le fonctionnement du transducteur. Ces autres efforts sont ici négligés pour simplifier la présentation des phénomènes.

L'expression de la force $P_1$ s'obtient en résolvant un système d'équations qui traduit l'équilibre de la partie mobile 2, ainsi que le comportement mécanique des lamelles 81 et 82. On obtient une intensité de force proportionnelle à l'accélération $\Gamma_1$ et sensiblement égale à :

$$P_1 = [HG/(E - E3)]M\Gamma_1$$

où

- HG est la distance entre deux plans perpendiculaires à l'axe Z'Z, le premier plan passant à mi-longueur des lamelles 81 et 82, et le second plan passant par le centre de gravité G de la partie mobile 2 et

- M est la masse de la partie mobile 2.

Le rapport [HG/(E - E3)], coefficient multiplicatif de $M\Gamma_1$ dans l'expression de la force $P_1$ peut atteindre plusieurs unités, par exemple cinq.

On notera que l'expression de la force $P_1$ est algébrique, ce qui traduit le fait que la force $P_1$ change de sens, devenant ainsi une force de compression longitudinale du résonateur 3, lorsque l'accélération $\Gamma_1$ change de sens.

La force $P_1$ d'extension ou de compression que subit le résonateur est la cause d'une variation $(\Delta F)_1$ de sa fréquence de résonance $F$, respectivement une augmentation ou une diminution :

$$(\Delta F)_1 = kP_1 = k[HG/(E - E3)]M\Gamma_1$$

où k est un coefficient dépendant de la nature de la vibration du résonateur, par exemple flexion ou torsion, de la géométrie du résonateur, et des caractéristiques du matériau, par exemple du quartz ou du silicium.

Ainsi les variations de la fréquence *F* sont proportionnelles à l'accélération $\Gamma_1$ appliquée perpendiculairement aux faces de la plaque de matériau. A titre d'exemple, il est possible d'obtenir une variation de fréquence valant 20 Hz/g pour un résonateur vibrant en flexion à 50000 Hz et un transducteur conçu pour mesurer jusqu'à 100 g. Les dimensions du corps monolithique de ce transducteur, en référence à la figure 5, sont H1 + H7 + H5 = 6 mm, L = 4 mm et E = 0,4 mm.

En se référant à la figure 7B, l'accélération $\Gamma_2$ appliquée parallèlement à l'axe Z'Z provoque principalement sur le résonateur 3 une force d'extension longitudinale $P_2$ sensiblement égale à $(1/2)M\Gamma_2$ et sur chacune des lamelles 81 et 82 une force d'extension longitudinale $Q_2$ sensiblement égale à $(1/4)M\Gamma_2$. Ces forces changent de sens lorsque l'accélération $\Gamma_2$ change de sens.

D'une façon analogue au cas précédent de l'accélération $\Gamma_1$, la force P2 d'extension ou de compression que subit le résonateur est la cause d'une variation $(\Delta F)_2$ de sa fréquence F de résonance, respectivement une augmentation ou une diminution :

$$(\Delta F)_2 = kP_2 = k(1/2)M\Gamma_2$$

La variation de fréquence $(\Delta F)_2$ est en général inférieure à la variation de fréquence $(\Delta F)_1$, pour une même intensité des accélérations $\Gamma_1$ et $\Gamma_2$. Ainsi, en reprenant l'exemple précédent de $(\Delta F)_1$ = 20 Hz/g, il est possible d'avoir $(\Delta F)_2$ = 2 Hz/g.

En se référant à la figure 7C, l'accélération $\Gamma_3$ appliquée perpendiculairement au plan PS du transducteur provoque principalement des forces $N_3$ et $V_3$ perpendiculaires à l'axe Z'Z sur chacune des lamelles, mais ne provoque pratiquement pas de force d'extension ou de compression sur le résonateur. Il en résulte que la variation de fréquence $(\Delta F)_3$ de sa fréquence F est pratiquement nulle.

Connaissant les variations de la fréquence F du résonateur pour les trois composantes $\Gamma_1$, $\Gamma_2$ et $\Gamma_3$ de l'accélération, il est avantageux de combiner deux transducteurs selon l'invention. La position du second transducteur est déduite de celle du premier transducteur par une rotation de 180° autour d'un axe parallèle à l'axe Z'Z, et les parties fixes des deux transducteurs sont solidaires d'une embase commune. Ainsi, cette combinaison de deux transducteurs selon l'invention constitue un accéléromètre à sortie différentielle dont la direction sensible est perpendiculaire aux faces des deux plaques de matériau, et présente, par rapport aux accéléromètres différentiels connus, l'avantage de supprimer le couplage mécanique entre les vibrations des résonateurs inclus dans les deux transducteurs. Lesdites vibrations ne se perturbent donc plus entr'elles, ce qui améliore la précision de la mesure de la fréquence différentielle, et donc la précision de l'accélération qui en est déduite. Ces aspects concernant une telle combinaison de deux transducteurs selon l'invention seront expliqués plus en détail ultérieurement.

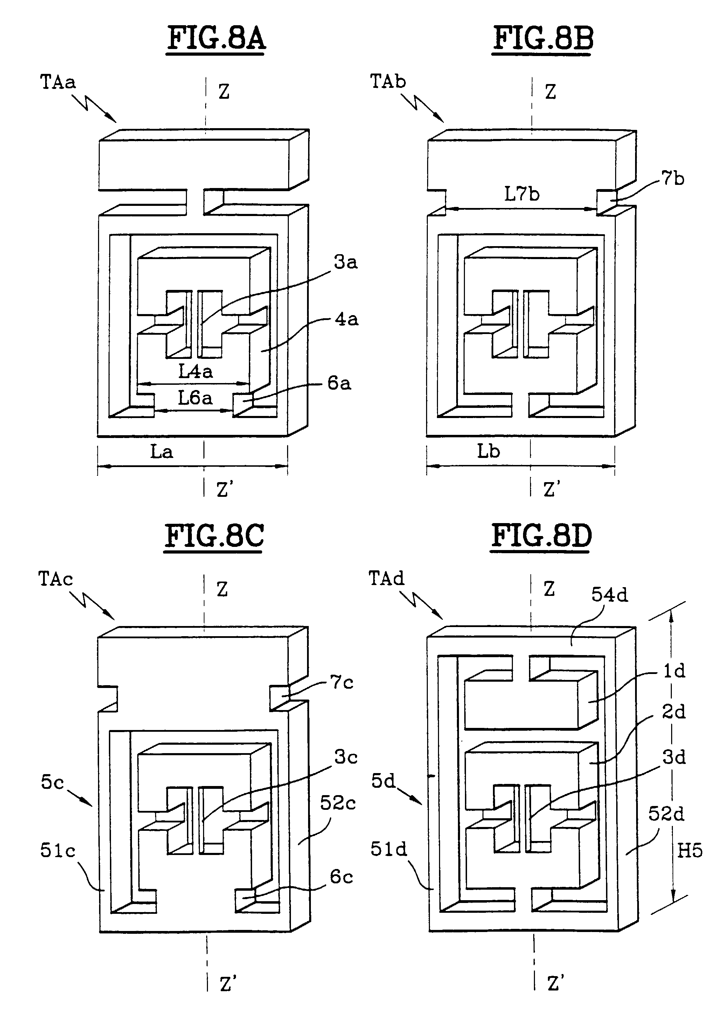

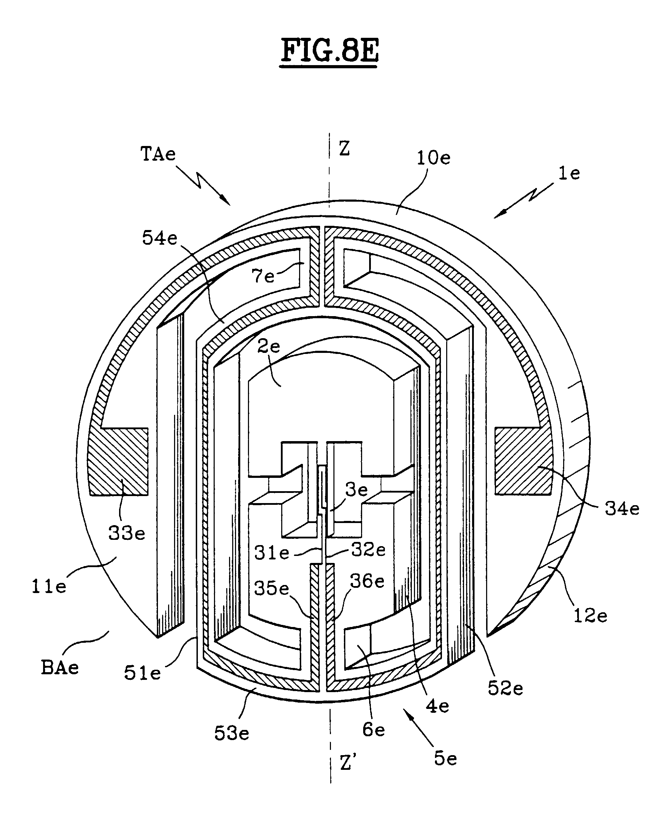

**Les figures 8A, 8B, 8C, 8D et 8E** montrent **d'autres réalisations** de transducteur selon l'invention.

En se référant à la figure 8A, un transducteur TAa diffère du transducteur TA de la figure 5 par un élément de liaison 6a dont la dimension L6a prise suivant la largeur La du transducteur TAa est nettement plus grande que la dimension L6. La dimension L6a est sensiblement inférieure à la dimension L4a de la partie mobile 4a du transducteur TAa prise suivant La. L'intérêt de cette réalisation réside dans la robustesse mécanique accrue du corps monolithique de transducteur conférée par la grande raideur de l'élément de liaison 6a du transducteur TAa, et donc dans une fréquence propre plus élevée du corps de transducteur. En contrepartie de cet avantage, le filtrage mécanique des vibrations du résonateur 3a du transducteur TAa est moins efficace que celui du résonateur 3 du transducteur TA, mais reste toutefois nettement plus efficace que ceux des accéléromètres connus.

La figure 8B montre un transducteur TAb qui diffère du transducteur TA de la figure 5 par un élément de liaison 7b dont la dimension L7b prise suivant la largeur Lb du transducteur TAb est sensiblement inférieure à la largeur Lb du transducteur. Par rapport au transducteur TA, les avantages et inconvénients de cette troisième réalisation sont sensiblement les mêmes que ceux du transducteur TAa de la figure 8A.

Dans les domaines d'application pour lesquels la robustesse mécanique constitue un critère essentiel, il est intéressant de réaliser un transducteur TAc comme représenté à la figure 8C, dans lequel deux éléments de liaison 6c et 7c ont la même conformation que l'élément de liaison 6a du transducteur TAa de la figure 8A et l'élément de liaison 7b du transducteur TAb de la figure 8B respectivement. Le filtrage mécanique des vibrations du résonateur 3c du transducteur TAc n'est ainsi pratiquement procuré que par la seule souplesse des tronçons 51c et 52c du cadre 5c du transducteur TAc, mais reste toutefois plus efficace que ceux des accéléromètres connus.

La figure 8D montre un transducteur TAd conçu plus particulièrement pour des applications où la miniaturisation est un critère important. Le transducteur TAd diffère du transducteur TA de la figure 5 principalement par la disposition de la partie fixe 1d à l'intérieur du cadre flexible 5d et entre le tronçon de cadre 54d et la partie mobile 2d du transducteur TAd. Ainsi ledit cadre 5d constitue le contour du transducteur TAd. Cette disposition réduit la taille du transducteur tout en conservant une longueur H5 des tronçons de cadre 51d et 52d suffisante pour leur conserver la souplesse nécessaire à l'obtention d'un très bon filtrage mécanique des vibrations du résonateur 3d du transducteur TAd.

L'efficacité du filtrage mécanique des vibrations du résonateur réside ainsi en majeure partie dans la souplesse des deux tronçons du cadre flexible parallèles à l'axe longitudinal central Z'Z du transducteur, c'est-à-dire parallèles à l'axe passant par les extrémités du résonateur. En effet, ces deux tronçons présentent, en comparaison avec les deux autres tronçons du cadre flexible et les deux éléments de liaison, la plus grande souplesse vis-à-vis des sollicitations mécaniques exercées par les vibrations du résonateur. D'une façon plus générale, le bon fonctionnement du transducteur selon l'invention impose au moins deux tronçons souples, de forme sensiblement parallélépipédique, et ayant leurs axes longitudinaux parallèles à l'axe passant par les deux extrémités du résonateur. Un cadre en forme d'anneau, analogue à la partie périphérique R2 du résonateur connu représenté sur la figure 4, ne pourrait pas convenir au bon fonctionnement du transducteur selon l'invention.

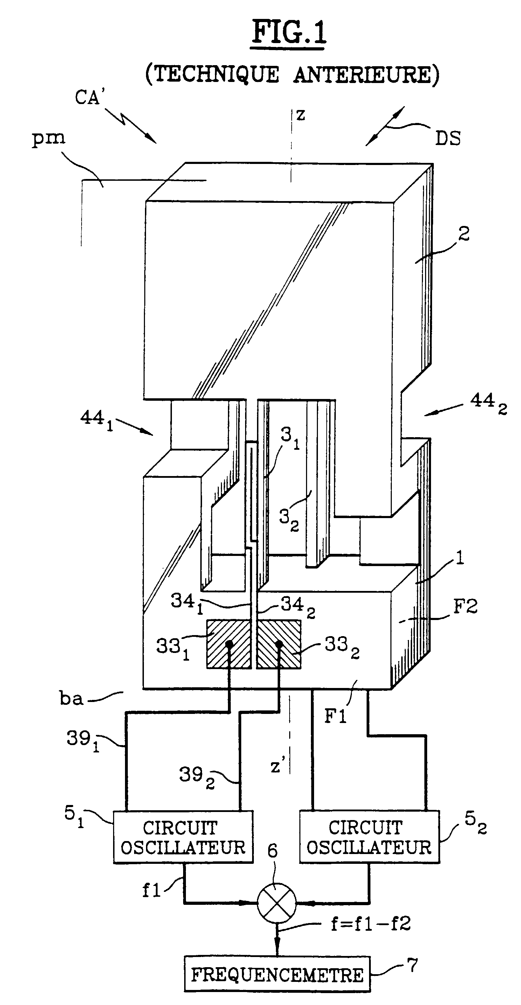

La **figure 8E** montre un transducteur TAe dont le corps monolithique est en quartz. Les moyens de mise en vibration du résonateur 3e dans le transducteur TAe sont analogues à ceux des lames vibrantes $3_1$ et $3_2$ du premier accéléromètre connu CA' représenté à la figure 1, et donc particulièrement adaptés aux vibrations en flexion parallèlement aux faces de la plaque de matériau. Le transducteur TAe diffère du transducteur TA représenté sur la figure 5 principalement par sa forme générale discoïde et par la forme en portions d'anneau des tronçons 53e et 54e du cadre flexible 5e et par la forme en U de la partie fixe le. Cette partie fixe comporte un tronçon de base 10e en forme de portion d'anneau longeant sensiblement le tronçon 54e du cadre flexible et solidaire de l'élément de liaison 7e, et deux branches 11e et 12e en forme de segments discordes s'étendant sensiblement le long des tronçons 51e et 52e du cadre et depuis les extrémités du tronçon de base 10e respectivement. Ainsi, le cadre flexible 5e est situé à l'intérieur de la forme en U de la partie fixe 1e.

Les branches 11e et 12e sont fixées, par exemple par collage, sur une embase de boîtier BAe.

Par rapport à la forme parallélépipédique de la partie fixe 1 du transducteur TA représenté à la figure 5, la forme en U de la partie fixe le du transducteur TAe présente les trois avantages suivants :

- le plan de pose du transducteur TAe sur l'embase BAe est mieux défini, pour un même encombrement de boîtier ;
- lorsqu'il est nécessaire d'améliorer la robustesse mécanique du transducteur, il est commode d'utiliser deux flasques qui prennent appui sur les faces des branches discoïdes 11e et 12e et qui limitent le débattement de la partie massive mobile 2e à une valeur prédéterminée ;
- la mise en oeuvre de la fixation du transducteur TAe sur l'embase BAe est facilitée par le fait que, le centre de masse du transducteur étant situé entre ses surfaces d'appui sur l'embase, il n'est pas nécessaire de recourir à un dispositif de maintien du transducteur sur l'embase.

S'agissant du filtrage mécanique des vibrations en flexion du résonateur 3e du transducteur TAe, l'efficacité du transducteur TAe est sensiblement équivalente à celle du transducteur TA, à cause de la souplesse suffisante des tronçons 51e et 52e.

Comme montré à la figure 8E, les moyens de mise en vibration du résonateur 3e sont sous la forme de deux électrodes métalliques 31e et 32e ayant des polarités opposées et excitant par effet piézoélectrique des vibrations en flexion du résonateur 3e. Les électrodes 31e et 32e sont disposées sur le côté du résonateur 3e tourné vers l'extérieur du corps de transducteur et leur configuration à "trois pistes" est décrite dans la demande de brevet FR-A-2 685 964 au nom du demandeur. Des connexions électriques entre les électrodes 31e et 32e et des traversées étanches (non représentées) de l'embase du boîtier sont réalisées au niveau des branches fixées 11e et 12e, par soudure sur des plages de contact métalliques respectives 33e et 34e de forme sensiblement rectangulaire. Comme illustré à la figure 8E, les plages métalliques 33e et 34e sont reliées aux électrodes respectives 31e et 32e par deux rubans conducteurs métalliques respectifs 35e et 36e supportés par la face visible de la partie mobile 4e, du cadre flexible 5e, des éléments de liaison 6e et 7e et du tronçon de base 10e.

Les électrodes, les rubans de liaison et les plages de contact peuvent être simultanément obtenus par gravure d'une couche métallique adhérente à la face visible de la plaque de quartz à partir de procédés photolithographiques classiques. Cette couche métallique adhérente peut avantageusement être celle qui a préalablement servi de masque protecteur pour l'usinage du corps monolithique de transducteur.

Les traversées étanches de l'embase du boîtier connectées aux électrodes 31e et 32e sont reliées électriquement aux deux bornes d'un circuit oscillateur (non représenté) en sortie duquel est produit un signal alternatif dont les variations de fréquence traduisent les variations de l'accélération appliquée au transducteur.

Comme indiqué précédemment, l'invention concerne également un **accéléromètre à sortie différentielle** comportant deux transducteurs d'accélération selon l'invention, la position du second transducteur se déduisant de celle du premier transducteur par une rotation de 180° autour d'un axe parallèle à l'axe passant par les deux extrémités du résonateur, les parties fixes des deux transducteurs étant solidaires d'une embase commune. Selon les réalisations illustrées aux figures 5, 8A, 8B, 8C, 8D et 8E, l'axe passant par les extrémités du résonateur est parallèle à l'axe Z'Z du transducteur. Ainsi, dans la combinaison de deux transducteurs selon l'invention, la position du second transducteur se déduit de celle du premier par une rotation de 180° autour d'un axe parallèle à l'axe Z'Z.

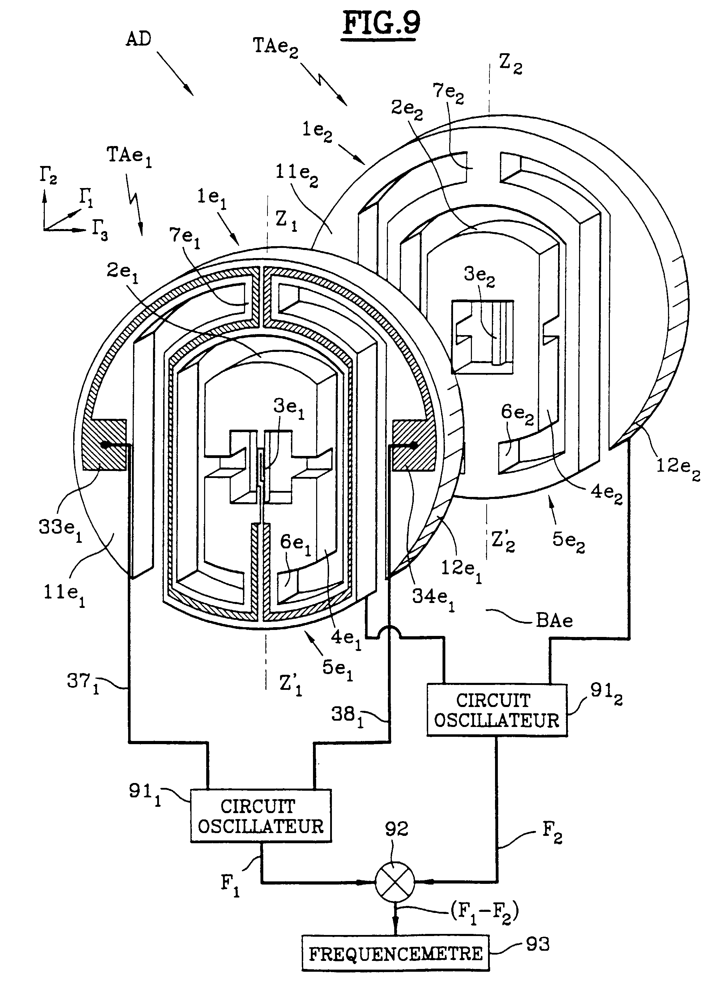

En référence à la figure 9, un accéléromètre différentiel AD comporte deux transducteurs $TAe_1$ et $TAe_2$ sensiblement identiques au transducteur TAe selon la représentation illustrée sur la figure 8E, les branches discoïdes $11e_1$ et $12e_1$ du transducteur $TAe_1$ et $11e_2$ et $12e_2$ du transducteur $TAe_2$ étant solidaires d'une embase commune BAe. Selon la réalisation illustrée à la figure 9, les transducteurs $TAe_1$ et $TAe_2$ sont symétriques l'un de l'autre par rapport à un plan parallèle aux faces des deux plaques de matériau. Cette disposition constitue un cas particulier de la disposition selon l'invention, et ne doit pas être considérée comme limitative. De même, le transducteur TAe a été choisi à titre d'exemple. La portée de la présente demande de brevet s'étend à la combinaison de deux transducteurs sensiblement identiques à l'un quelconque des transducteurs TA, TAa, TAb, TAc et TAd représentés aux figures 5, 8A, 8B, 8C et 8D respectivement et plus généralement à la combinaison de deux transducteurs selon l'invention.

En se référant à nouveau à la figure 9, les plages métalliques $33e_1$ et $34e_1$ du transducteur $TAe_1$ sont reliées à deux premières bornes d'un circuit oscillateur $91_1$ au moyen de deux fils conducteurs $37_1$ et $38_1$. La disposition identique d'électrodes, de rubans de liaison et de plages de contact sur la face non visible du transducteur $TAe_2$ est en relation avec un second circuit oscillateur $91_2$.

Les sorties des deux circuits $91_1$ et $91_2$ sont reliées à un dispositif de mesure de fréquence différentielle incluant un circuit de soustraction de fréquence 92 et un fréquencemètre 93, la fréquence mesurée $(F_1 - F_2)$ par le fréquencemètre 93 étant représentative de l'accélération à mesurer.

Le fonctionnement de l'accéléromètre différentiel AD est maintenant présenté en référence aux explications précédentes se rapportant aux figures 7A, 7B et 7C.

En se référant à nouveau à la figure 9, l'accélération $\Gamma_1$ appliquée perpendiculairement aux faces des deux plaques de matériau provoque sur les résonateurs $3e_1$ et $3e_2$ des forces longitudinales (non représentées) d'extension et de compression respectivement, et de même intensité si les transducteurs $TAe_1$ et $TAe_2$ sont identiques. Ces forces longitudinales sont la cause d'une augmentation $(\Delta F)_1$ de la fréquence $F_1$ du résonateur $3e_1$ et d'une diminution de même valeur de la fréquence $F_2$ du résonateur $3e_2$.

L'expression de la variation de fréquence $(\Delta F)_1$ a été écrite précédemment en fonction des caractéristiques mécaniques et géométriques du transducteur.

La fréquence différentielle $(F_1 - F_2)$ subit ainsi une augmentation égale à :

$$\Delta(F_1 - F_2) = 2(\Delta F)_1$$

L'accélération $\Gamma_2$ appliquée parallèlement aux axes $Z_1'Z_1$ et $Z_2' Z_2$ des transducteurs $TAe_1$ et $TAe_2$ provoque sur les résonateurs $3e_1$ et $3e_2$ des forces longitudinales (non représentées) d'extension et de même intensité qui sont la cause de la même augmentation $(\Delta F)_2$ de leurs fréquences de résonance.

Ainsi, la fréquence différentielle $(F_1 - F_2)$ ne subit pas de variation liée à l'accélération $\Gamma_2$.

L'accélération $\Gamma_3$ appliquée perpendiculairement aux deux directions précédentes d'accélération ne provoque pas de forces longitudinales sur les résonateurs $3e_1$ et $3e_2$. Il en résulte que les fréquences $F_1$ et $F_2$ et donc la fréquence différentielle $(F_1 - F_2)$ ne subissent pas de variation liée à l'accélération $\Gamma_3$.

Ainsi, la direction sensible de l'accéléromètre différentiel AD est perpendiculaire aux faces des deux plaques de matériau.

Grâce à l'efficacité du filtrage mécanique des vibrations de chacun des résonateurs $3e_1$ et $3e_2$, l'accéléromètre différentiel AD présente deux avantages par rapport aux accéléromètres connus décrits précédemment. En premier lieu, les coefficients de surtension des résonateurs ne sont pas altérés, et en second lieu le couplage mécanique entre leurs vibrations est supprimé. Ces deux avantages procurent à l'accéléromètre AD une précision améliorée.

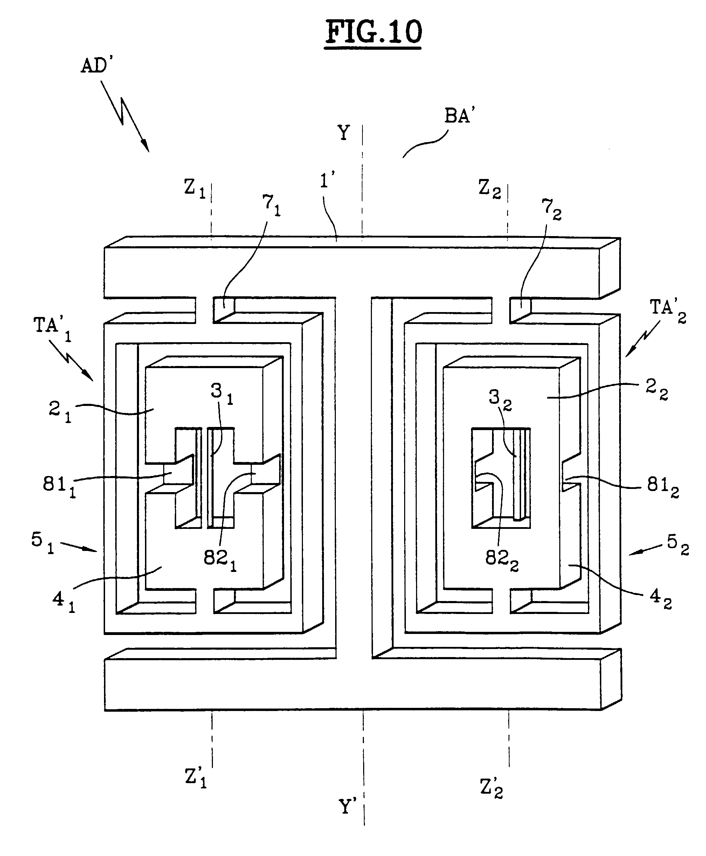

La figure 10 montre un accéléromètre différentiel AD' comportant deux transducteurs $TA_1'$ et $TA_2'$ sensiblement identiques et réalisés dans la même plaque de matériau d'épaisseur uniforme. La conformation de ces transducteurs est voisine de celle du transducteur TA représenté sur la figure 5. Selon la réalisation illustrée à la figure 10, l'accéléromètre différentiel AD' constitue un corps monolithique ayant la forme générale d'un parallélépipède. Les parties mobiles $2_1, 4_1$ et $2_2, 4_2$, les cadres $5_1$ et $5_2$ et la partie fixe 1' des deux transducteurs $TA'_1$ et $TA'_2$ ont des faces coplanaires confondues avec les deux faces de la plaque. Le résonateur $3_1$ de l'un $TA_1'$ des transducteurs et les lamelles $81_2$ et $82_2$ de l'autre transducteur $TA_2'$ affleurent l'une des deux faces de la plaque ; de même, le résonateur $3_2$ de l'autre transducteur $TA_2'$ et les lamelles $81_1$ et $82_1$ du premier transducteur $TA_1'$ affleurent l'autre face de la plaque. Un axe central Y'Y parallèle aux faces de la plaque constitue un axe de symétrie de l'accéléromètre AD'. Selon la réalisation illustrée, les axes longitudinaux $Z_1'Z_1$ et $Z_2'Z_2$ des transducteurs $TA_1'$ et $TA_2'$ respectivement sont parallèles à l'axe Y'Y, et les transducteurs $TA_1'$ et $TA_2'$ sont symétriques l'un de l'autre par rapport à l'axe Y'Y, ce qui constitue un cas particulier de la disposition selon l'invention. Selon la réalisation illustrée, la partie fixe 1' de l'accéléromètre différentiel AD' a un contour de face en I ayant une branche longitudinale axée sur l'axe Y'Y et l'une des branches transversales solidaire des éléments de liaison $7_1$ et $7_2$ des transducteurs $TA_1'$ et $TA_2'$ respectivement. Les intérêts de cette forme en I de la partie fixe 1' sont analogues à ceux de la forme en U de la partie fixe 1e du transducteur TAe représenté sur la figure 8E : plan de pose bien défini, commodité d'utiliser deux flasques constituant des butées, et facilité de la mise en oeuvre de la fixation de ladite partie fixe sur une embase.

Comme pour l'accéléromètre différentiel AD représenté à la figure 9, la direction sensible de l'accéléromètre différentiel AD' est perpendiculaire aux faces de la plaque de matériau, et l'avantage de l'accéléromètre AD' par rapport aux accéléromètres connus est une précision améliorée.

Par rapport à l'accéléromètre AD, l'intégration en boîtier de l'accéléromètre AD' est simplifiée, ce qui est avantageux quand les critères de miniaturisation et de faible coût sont déterminants.

En contrepartie, l'accéléromètre AD présente l'avantage de permettre une sélection des deux transducteurs le constituant, dans le but d'améliorer encore la précision de la mesure.

**Revendications**

1.  Transducteur monolithique d'accélération comprenant une partie fixe (1), une partie massive mobile (2), et un résonateur (3) ayant l'une de deux extrémités solidaire de la partie massive mobile (2), caractérisé en ce qu'il comprend une seconde partie massive mobile (4) solidaire de l'autre extrémité du résonateur (3), un cadre flexible (5) entourant les deux parties massives mobiles (2, 4), un premier élément de liaison (6) reliant le cadre (5) à la seconde partie massive mobile (4), et un second élément de liaison (7) reliant le cadre (5) à la partie fixe (1).

2.  Transducteur conforme à la revendication 1, dans lequel le cadre flexible (5) est rectangulaire et comprend deux tronçons (51, 52) s'étendant sensiblement parallèlement au résonateur (3), et deux autres tronçons (53, 54) s'étendant sensiblement perpendiculairement au résonateur (3) et reliés respectivement à la seconde partie massive mobile (4) et la partie fixe (1) par les premier et second éléments de liaison (6, 7), le premier élément de liaison (6) ayant une largeur (L6, L6a) inférieure à la largeur (L4, L4a) de la seconde partie massive mobile (4), et le second élément de liaison (7) ayant une largeur (L7, L7b) inférieure à la longueur desdits autres tronçons (53, 54), lesdites largeurs (L6, L6a ; L4, L4a ; L7, L7b) étant prises suivant la longueur (L, La, Lb) desdits autres tronçons (53, 54), de préférence au moins l'un des éléments de liaison (6, 7) ayant une section transversale (L6.E ; L7.E) du même ordre de grandeur que celles (L51.E, H53.E, H54.E) des tronçons de cadre.

3.  Transducteur conforme à la revendication 1 ou 2, dans lequel les parties massives mobiles (2, 4), le résonateur (3), le cadre flexible (5) et les éléments de liaison (6, 7) ont un même plan de symétrie (PS) perpendiculaire au plan (PM) du cadre, les éléments de liaison (6, 7) étant situés respectivement à des intersections du cadre et dudit plan de symétrie.

4.  Transducteur conforme à l'une quelconque des revendications 1 à 3, comprenant deux lamelles coplanaires (81, 82) ayant chacune des extrémités solidaires des deux parties massives mobiles (2, 4) respectivement, et disposées de part et d'autre du résonateur (3).

5.  Transducteur conforme à la revendication 4, dans lequel les lamelles (81, 82) ont une longueur (H8) nettement inférieure à celle (H3) du résonateur (3), de préférence comprise entre le dixième et la moitié de la longueur (H3) du résonateur.

6.  Transducteur conforme à la revendication 4 ou 5, dans lequel la position des lamelles (81, 82) est sensiblement à l'aplomb du milieu de la longueur (H3) du résonateur (3).

7.  Transducteur conforme à l'une quelconque des revendications 4 à 6, dans lequel les lamelles (81, 82) affleurent une face commune aux deux parties massives mobiles (2, 4), le résonateur (3) affleure une autre face commune aux deux parties massives mobiles, et les lamelles et le résonateur ont une même épaisseur (E8=E3) prise suivant l'épaisseur (E) des parties massives mobiles.

8.  Transducteur conforme à l'une quelconque des revendications 1 à 7, dans lequel la partie fixe (1d) est disposée à l'intérieur du cadre (5d).

9.  Transducteur conforme à l'une quelconque des revendications 1 à 7, dans lequel la partie fixe (1e) a une forme en U entourant le cadre (5e) à l'exception d'un tronçon de cadre (53e) lié au premier élément de liaison (6e) et comprend un tronçon de base annulaire (10e) ayant un milieu solidaire du second élément de liaison (7e), et deux branches (11e, 12e) solidaires d'extrémités respectives du tronçon de base (10e) pour fixer le transducteur (TAe) sur une embase (BAe).

10. Transducteur conforme à l'une quelconque des revendications 1 à 9, comprenant deux électrodes (31e, 32e) supportées par le résonateur (3e), deux plages de contact (33e, 34e) supportées par la partie fixe (1e), et deux rubans conducteurs (35e, 36e) supportés par la seconde partie massive mobile (4e), le premier élément de liaison (6e), le cadre (5e), le second élément de liaison (7e), et la partie fixe (1e) pour relier respectivement les deux électrodes (31e, 32e) aux deux plages de contact (33e, 34e).

**11.** Accéléromètre comportant des premier et second transducteurs monolithiques d'accélération conforme à l'une quelconque des revendications 1 à 10, la position du second transducteur ($TAe_2$ ; $TA_2'$) étant déduite de celle du premier transducteur ($TAe_1$ ; $TA_1'$) par une rotation de 180° autour d'un axe (Y'Y) parallèle à un axe passant par les extrémités du résonateur ($3e_1$ ; $3_1$) du premier transducteur, les parties fixes ($1e_1$, $1e_2$ ; $1'$) des deux transducteurs étant solidaires.

**12.** Accéléromètre conforme à la revendication 11, dans lequel les transducteurs ($TAe_1$, $TAe_2$) sont symétriques l'un de l'autre par rapport à un plan parallèle à des faces coplanaires des parties massives mobiles ($2e_1$, $4e_1$ ; $2e_2$, $4e_2$) de chacun des transducteurs.

**13.** Accéléromètre conforme à la revendication 11, dans lequel les parties massives mobiles ($2_1$, $4_1$, $2_2$, $4_2$), les cadres ($5_1$, $5_2$) et les parties fixes ($1_1$, $1_2$) des transducteurs ($TA_1'$ ; $TA_2'$) ont des faces coplanaires, les transducteurs étant de préférence symétriques l'un de l'autre par rapport à un axe (Y'Y) parallèle aux faces coplanaires.

## Patentansprüche

**1.** Monolothischer Beschleunigungsaufnehmer, umfassend einen festen Teil (1), einen beweglichen Massivteil (2) und einen Resonator (3), dessen eines von zwei Enden fest mit dem beweglichen Massivteil (2) verbunden ist, dadurch **gekennzeichnet,** daß er einen zweiten beweglichen Massivteil (4), der fest mit dem anderen Ende des Resonators (3) verbunden ist, einen flexiblen Rahmen (5), der die beiden beweglichen Massivteile (2, 4) umgibt, ein erstes Verbindungselement (6), das den Rahmen (5) mit dem zweiten beweglichen Massivteil (4) verbindet, und ein zweites Verbindungselement (7), das den Rahmen (5) mit dem festen Teil (1) verbindet, umfaßt.

**2.** Aufnehmer nach Anspruch 1, bei dem der flexible Rahmen (5) rechteckförmig ist und zwei Teilstücke (51, 52), die sich im wesentlichen parallel zum Resonator (3) erstrecken, und zwei weitere Teilstücke (53, 54) umfaßt, die sich im wesentlichen senkrecht zum Resonator (3) erstrecken und jeweils mit dem zweiten beweglichen Massivteil (4) und dem festen Teil (1) durch die ersten und zweiten Verbindungselemente (6, 7) verbunden sind, wobei das erste Verbindungselement (6) eine Breite (L6, L6a) kleiner als die Breite (L4, L4a) des zweiten beweglichen Massivteils (4) aufweist und das zweite Verbindungselement (7) eine Breite (L7, L7b) kleiner als die Länge der anderen Teilstücke (53, 54) aufweist, wobei die Breiten (L6, L6a; L4, L4a; L7, L7b) entsprechend der Länge (L, La, Lb) der anderen Teilstücke (53, 54) genommen sind, wobei vorzugsweise wenigstens das eine der Verbindungselemente (6, 7) einen Querschnitt (L6.E; L7.E) in derselben Größenordnung wie diejenigen (L51.E, H53.E, H54.E) der Rahmenteilstücke aufweist.

**3.** Aufnehmer nach Anspruch 1 oder 2, bei dem die beweglichen Massivteile (2, 4), der Resonator (3), der flexible Rahmen (5) und die Verbindungselemente (6, 7) dieselbe Symmetrieebene (PS) senkrecht zur Ebene (PM) des Rahmens aufweisen, wobei sich die Verbindungselemente (6, 7) jeweils an Schnittstellen des Rahmens und der Symmetrieebene befinden.

**4.** Aufnehmer nach einem beliebigen der Ansprüche 1 bis 3, umfassend zwei koplanare Lamellen (81, 82), die jeweils fest mit zwei beweglichen Massivteilen (2, 4) jeweils verbundene Enden aufweisen und auf beiden Seiten des Resonators (3) angeordnet sind.

**5.** Aufnehmer nach Anspruch 4, bei dem die Lamellen (81, 82) eine Länge (H8) deutlich kleiner als diejenige (H3) des Resonators (3) aufweisen, vorzugsweise enthalten zwischen einem Zehntel und der Hälfte der Länge (H3) des Resonators.

**6.** Aufnehmer nach Anspruch 4 oder 5, bei dem die Position der Lamellen (81, 82) im wesentlichen senkrecht zur Mitte der Länge (H3) des Resonators (3) ist.

**7.** Aufnehmer nach einem beliebigen der Ansprüche 4 bis 6, bei dem die Lamellen (81, 82) mit einer den beiden beweglichen Massivteilen (2, 4) gemeinsamen Seite fluchten, der Resonator (3) mit einer anderen den beiden beweglichen Massivteilen gemeinsamen Seite fluchtet und die Lamellen und der Resonator dieselbe Dicke (E8=E3) aufweisen, genommen entsprechend der Dicke (E) der beweglichen Massivteile.

**8.** Aufnehmer nach einem beliebigen der Ansprüche 1 bis 7, bei dem der feste Teil (1d) im Inneren des Rahmens (5d) angeordnet ist.

**9.** Aufnehmer nach einem beliebigen der Ansprüche 1 bis 7, bei dem der feste Teil (1e) eine U-Form aufweist, die den Rahmen (5e) mit Ausnahme eines Rahmenteilstücks (53e) umgibt, das mit dem ersten Verbindungselement (6e) verbunden ist und ein ringförmiges Basisteilstück (10e) mit einer fest mit dem zweiten Verbindungselement (7e) verbundenen Mitte und zwei fest mit entsprechenden Enden des Basisteilstücks (10e) verbundene Zweige (11e, 12e) umfaßt, um den Aufnehmer (TAe) auf einem Befestigungssockel (BAe) zu befestigen.

10. Aufnehmer nach einem beliebigen der Ansprüche 1 bis 9, umfassend zwei durch den Resonator (3e) getragene Elektroden (31e, 32e), zwei durch den festen Teil (1e) getragene Kontaktbereiche (33e, 34e) und zwei von dem zweiten beweglichen Massivteil (4e), das erste Verbindungselement (6e), den Rahmen (5e), das zweite Verbindungselement (7e) und den festen Teil (1e) getragene Leitungsbänder (35e, 36e), um jeweils die beiden Elektroden (31e, 32e) mit den beiden Kontaktbereichen (33e, 34e) zu verbinden.

11. Beschleunigungsmesser, umfassend erste und zweite monolithische Beschleunigungsaufnehmer nach einem beliebigen der Ansprüche 1 bis 10, wobei die Position des zweiten Aufnehmers $(TAe_2; TA_2')$ von derjenigen des ersten Aufnehmers $(TAe_1; TA_1')$ durch Drehung um 180° um eine Achse (Y'Y) parallel zu einer Achse abgeleitet ist, die durch die Enden des Resonators $(3e_1; 3_1)$ des ersten Aufnehmers verläuft, wobei die festen Teile $(1e_1, 1e_2; 1')$ der beiden Aufnehmer fest verbunden sind.

12. Beschleunigungsmesser nach Anspruch 11, bei dem die Aufnehmer $(TAe_1, TAe_2)$ zueinander in bezug auf eine Ebene parallel zu koplanaren Seiten der beweglichen Massivteile $(2e_1, 4e_1; 2e_2, 4e_2)$ jedes der Aufnehmer symmetrisch sind.

13. Beschleunigungsmesser nach Anspruch 11, bei dem die beweglichen Massivteile $(2_1, 4_1, 2_2, 4_2)$, die Rahmen $(5_1, 5_2)$ und die festen Teile $(1_1, 1_2)$ der Aufnehmer $(TA_1'; TA_2')$ koplanare Seiten aufweisen, wobei die Aufnehmer vorzugsweise zueinander in bezug auf eine Achse (Y'Y) parallel zu den koplanaren Seiten symmetrisch sind.

**Claims**

1. Monolithic accelerometric transducer comprising a fixed part (1), a mobile mass part (2), and a resonator (3) having one of two ends fastened to the mobile mass part (2), characterized in that it comprises a second mobile mass part (4) fastened to the other end of the resonator (3), a flexible frame (5) surrounding the two mobile mass parts (2, 4), a first connecting member (6) connecting the frame (5) to the second mass mobile part (4), and a second connecting member (7) connecting the frame (5) to the fixed part (1).

2. Transducer according to claim 1, wherein the flexible frame (5) is rectangular and comprises two sections (51, 52) extending substantially parallel to the resonator (3), and two other sections (53, 54) extending substantially perpendicular to the resonator (3) and respectively connected to the second mobile mass part (4) and the fixed part (1) by the first and second connecting members (6, 7), the first connecting member (6) having a width (L6, L6a) less than the width (L4, L4a) of the second mobile mass part (4), and the second connecting member (7) having a width (L7, L7b) less than the length of said other sections (53, 54), said widths (L6, L6a ; L4, L4a ; L7, L7b) being considered in the lengthwise direction (L, La, Lb) of said other sections (53, 54), preferably at least one of the connecting members (6, 7) having a cross-section (L6.E ; L7.E) in the same order of magnitude as those (L51.E, H53.E, H54.E) of the frame sections.

3. Transducer according to claim 1 or 2, wherein the mobile mass parts (2, 4), the resonator (3), the flexible frame (5) and the connecting members (6, 7) have a common plane of symmetry (PS) perpendicular to the plane (PM) of the frame, the connecting members (6, 7) being respectively located at intersections of the frame and said plane of symmetry.

4. Transducer according to any one of claims 1 to 3, comprising two coplanar blades (81, 82) each having ends fastened to the two mobile mass parts (2, 4), respectively, and disposed one on each side of the resonator (3).

5. Transducer according to claim 4, wherein the blades (81, 82) have a length (H8) significantly less than that (H3) of the resonator (3), preferably lying between one tenth and one half the length (H3) of the resonator.

6. Transducer according to claim 4 or 5, wherein the position of the blades (81, 82) is substantially in the middle of the length (H3) of the resonator (3).

7. Transducer according to any one of claims 4 to 6, wherein the blades (81, 82) are flush with a face common to the two mobile mass parts (2, 4), the resonator (3) is flush with another face common to the two mobile mass parts, and the blades and the resonator have a common width (E8=E3) considered in the direction of the thickness (E) of the mobile mass parts.

8. Transducer according to any one of claims 1 to 7, wherein the fixed part (1d) is located inside the frame (5d).

9. Transducer according to any one of claims 1 to 7, wherein the fixed part (1e) has a U-shape surrounding the frame (5e) except for a frame section (53e) connected to the first connecting member (6e) and comprises an annular base section (10e) having a middle portion fastened to the second connecting member (7e), and two branches (11e, 12e) fastened to respective ends of the base section (10e) to fix the transducer (TAe) on a base (BAe).

10. Transducer according to any one of claims 1 to 9, comprising two electrodes (31e, 32e) supported by the resonator (3e), two contact pads (33e, 34e) supported by the fixed part (1e), and two conductor strips (35e, 36e) supported by the second mobile mass part (4e), the first connecting member (6e), the frame (5e), the second connecting member (7e), and the fixed part (1e) for respectively connecting the two electrodes (31e, 32e) to the two contact pads (33e, 34e).

11. Accelerometer including first and second monolithic accelerometric transducers according to any one of claims 1 to 10, the position of the second transducer ($TAe_2$ ; $TA_2'$) being deduced from that of the first transducer ($TAe_1$ ; $TA_1'$) by a rotation of 180° about an axis (Y'Y) parallel to an axis passing through the ends of the resonator ($3e_1$ ; $3_1$) of the first transducer, the fixed parts ($1e_1$, $1e_2$ ; $1'$) of the two transducers being fastened together.

12. Accelerometer according to claim 11, wherein the transducers ($TAe_1$, $TAe_2$) are symmetrical to each other about a plane parallel to coplanar faces of the mobile mass parts ($2e_1$, $4e_1$ ; $2e_2$, $4e_2$) of each of the transducers.

13. Accelerometer according to claim 11, wherein the mobile mass parts ($2_1$, $4_1$, $2_2$, $4_2$), the frames ($5_1$, $5_2$) and the fixed parts ($1_1$, $1_2$) of the transducers ($TA_1'$ ; $TA_2'$) have coplanar faces, the transducers preferably being symmetrical to each other about an axis (Y'Y) parallel to the coplanar faces.

# FIG.1

## (TECHNIQUE ANTERIEURE)

# FIG.2

(TECHNIQUE
ANTERIEURE)

# FIG.3

(TECHNIQUE
ANTERIEURE)

# FIG.4

(TECHNIQUE
ANTERIEURE)

# FIG.5

# FIG.6A

# FIG.6B

**FIG.7A**

**FIG.7B**

**FIG.7C**

## FIG.8A

TAa

Z

3a

4a

L4a

L6a

6a

La

Z'

## FIG.8B

TAb

Z

L7b

7b

Lb

Z'

## FIG.8C

TAc

Z

7c

3c

5c

52c

51c

6c

Z'

## FIG.8D

TAd

Z

54d

1d

2d

3d

5d

52d

51d

H5

Z'

# FIG.8E

# FIG.9

# FIG.10